# EUROPÄISCHE PATENTANMELDUNG

(11) **EP 0 846 663 A2**
(43) Veröffentlichungstag der Anmeldung: **10.06.1998**
(21) Anmeldenummer: 97119879.1
(22) Anmeldetag: 13.11.1997
(51) Int. Cl.: C02F 1/32

(54) **Vorrichtung zur Behandlung von Flüssigkeiten mittels UV-Bestrahlung**

(30) Priorität: 05.12.1996 DE 19650561
(71) Anmelder: OASE-PUMPEN Wübker Söhne GmbH & Co., Maschinenfabrik, 48477 Hörstel (DE)
(72) Erfinder: Wübker, Josef, 49477 Ibbenbüren (DE); Hoffmeier, Dieter, 49477 Ibbenbüren (DE)
(74) Vertreter: Busse & Busse Patentanwälte

(57) **Zusammenfassung**

Eine Vorrichtung zur Behandlung von Flüssigkeiten, insbesondere von in Kreisläufen geführtem Wasser von Aquarien oder Teichen, mit einer zur Beaufschlagung der Flüssigkeit mit Licht, insbesondere UV-Licht, ausgebildeten Bestrahlungseinheit (1), die zumindest eine Lampe (2) umfaßt, die in einem gegenüber der zu bestrahlenden Flüssigkeit durch eine transparente Schutzscheibe (3) separierten Trockenraum (5) angeordnet ist, weist zumindest ein der Schutzscheibe (3) zugewandtes und auf deren flüssigkeitsbeaufschlagter Seite beweglich angeordnetes Reinigungselement (6) auf.

## Beschreibung

Die Erfindung bezieht sich auf eine Vorrichtung zur Behandlung von Flüssigkeiten, insbesondere von in Kreisläufen geführtem Wasser von Aquarien oder Teichen, nach dem Oberbegriff des Anspruches 1 sowie nach dem Oberbegriff des Anspruches 12 und dem Oberbegriff des Anspruches 13.

Vorrichtungen der eingangs genannten Art finden Verwendung zur Reinigung von beispielsweise Gartenteichen, bei denen das Teichwasser zunächst von einer Umwälzpumpe angesaugt und dann der eingangs genannten Vorrichtung zugeführt wird, in der eine Reinigung des Wassers einerseits von Feststoffen und andererseits von Bakterien und anderen biologischen Elementen stattfindet, wozu die Vorrichtung neben einer Filtereinheit eine Bestrahlungseinheit enthält, in der das durchlaufende Wasser mit Licht, insbesondere UV-Licht, bestrahlt wird, um hier eine Entkeimung zu bewirken. Hierfür werden insbesondere Gasentladungslampen eingesetzt, die im ultravioletten Bereich strahlen. Solche Gasentladungslampen sind üblicherweise röhrenartig ausgebildet und in ein Schutzrohr aus Glas eingebettet, dessen Außenseite in Kontakt mit der zu reinigenden Flüssigkeit steht.

Auch ist es möglich, daß die Schutzscheibe planeben oder anders geformt ausgebildet ist. In jedem Fall trennt sie die Lampe, die sich in einem Trockenraum befindet, von der Flüssigkeit ab. Dabei ergibt sich das Problem, daß die Schutzscheibe auf der der Flüssigkeit zugewandten Seite einer Verschmutzung ausgesetzt ist, wodurch sich die Transparenz der Scheibe verringert, so daß in regelmäßigen Intervallen eine Reinigung der Schutzscheibe durchgeführt werden muß. Dazu muß im allgemeinen die Bestrahlungeinheit demontiert werden, was mit erheblichem Aufwand und Risiken hinsichtlich stromführender Teile und einer Bestrahlung mit UV-Licht einhergeht.

Der Erfindung liegt daher das Problem zugrunde, die Betriebssicherheit und die Wartungsarmut solcher Vorrichtungen zu verbessern, ohne dabei eine baulich aufwendige oder in der Montage und Demontage schwierige Konstruktion zu erhalten.

Die Erfindung löst dieses Problem mit den Merkmalen des Anspruches 1.

Durch die Anordnung eines der Schutzscheibe zugewandten und auf deren flüssigkeitsbeaufschlagter Seite beweglichen Reinigungselmentes ist erreicht, daß ohne Demontage der Bestrahlungseinheit eine Reinigung der Schutzscheibe durchgeführt werden kann, so daß deren Transparenz erhalten bleibt und der Wartungsaufwand deutlich verringert ist.

Wenn die Lampe, wie bei Gasentladungsröhren häufig der Fall, von einer im wesentlichen rundzylindrischen Schutzscheibe umgeben ist, deren Außenseite in Kontakt mit der zu reinigen Flüssigkeit steht, ist das Reinigungselement vorzugsweise als ein die zylindrische Schutzscheibe umgreifender Ring ausgebildet, der entlang der Längsachse der Schutzscheibe an dieser verfahrbar ist.

Dazu kann ein dem Ring zugeordneter ferromagnetischer Körper dienen, der über ein außen an der Bestrahlungseinheit verfahrbares Gegenstück aus ebenfalls ferromagnetischen Material beweglich geführt ist. Bei dieser magnetischen Kopplung, wobei zumindest einer der ferromagnetischen Körper einen Permanentmagneten ausbildet, ist ein Durchbruch durch das Gehäuse der Bestrahlungseinheit entbehrlich, dessen Dichtigkeit wird also nicht beeinträchtigt.

Insbesondere bei Bestrahlungseinheiten, in denen der Flüssigkeitsstand eine gewisse Füllhöhe nicht überschreitet, ist es auch möglich, das Reinigungselement über ein Schubgestänge oder dergleichen zu bedienen, bei dem ein Bedienhebel durch eine Gehäuseöffnung nach außen geführt ist.

Das Reinigungselement kann sowohl als Bürste wie auch als Schabelement ausgebildet sein, in jedem Fall wird ein mechanischer Abtrag von auf der Schutzscheibe angelagerten Feststoffen erreicht.

Wenn das Reinigungselement zumindest zwei Reinigungskörper an gegenüberliegenden Seiten eines Tragkörpers umfaßt, ist sichergestellt, daß die Reinigung der Schutzscheibe bis in ihren Randbereich durchgeführt werden kann, so daß keine ungereinigten Stellen an den Enden verbleiben.

Die Betriebssicherheit wird gemäß einer Alternativversion der Erfindung erhöht, wenn die endseitigen elektrischen Kontakte der Gasentladungslampe an ihren zugänglichen Enden über Anschlußkappen angeschlossen werden, die nicht nur die elektrischen Anschlüsse tragen, sondern andererseits auch den Trockenraum dicht abschließen, so daß eine Beaufschlagung eines Demontierenden mit UV-Licht ausgeschlossen ist, da bei Ablösung einer der Kappen der elektrische Kontakt zur Versorgung der Lampe unterbrochen wird.

Weiter sieht eine besonders vorteilhafte Erfindungsversion vor, eine Bestrahlungseinheit so auszubilden, daß sie zwei baugleiche Gehäusehälften umfaßt, was sowohl den Fertigungsaufwand verringert wie auch die Wartung und Ersatzteilbeschaffung vereinfacht.

Weitere Vorteile und Einzelheiten ergeben sich aus der Zeichnung und der nachfolgenden Beschreibung eines Ausführungsbeispiels des Gegenstandes der Erfindung.

In der Zeichnung zeigen:

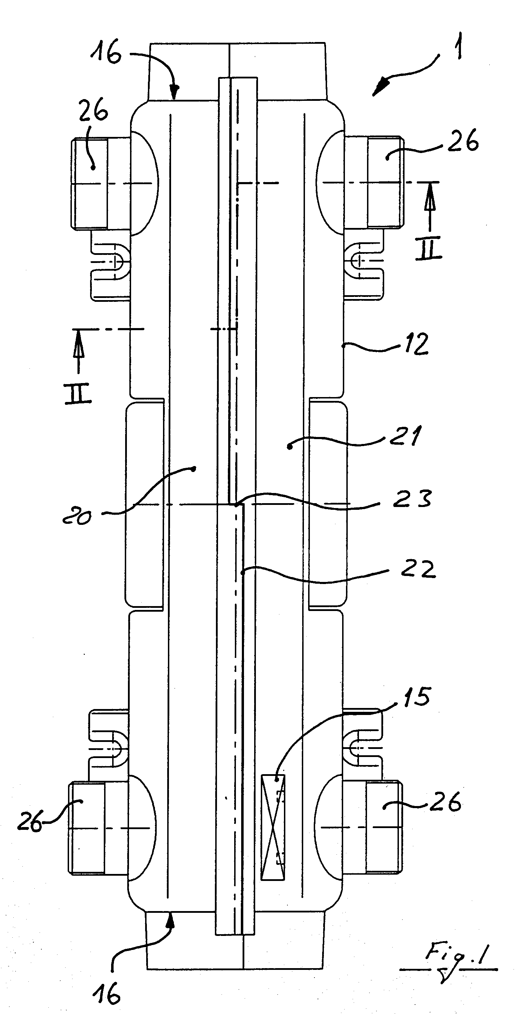

- Fig. 1: eine Bestrahlungseinheit in Draufsicht,

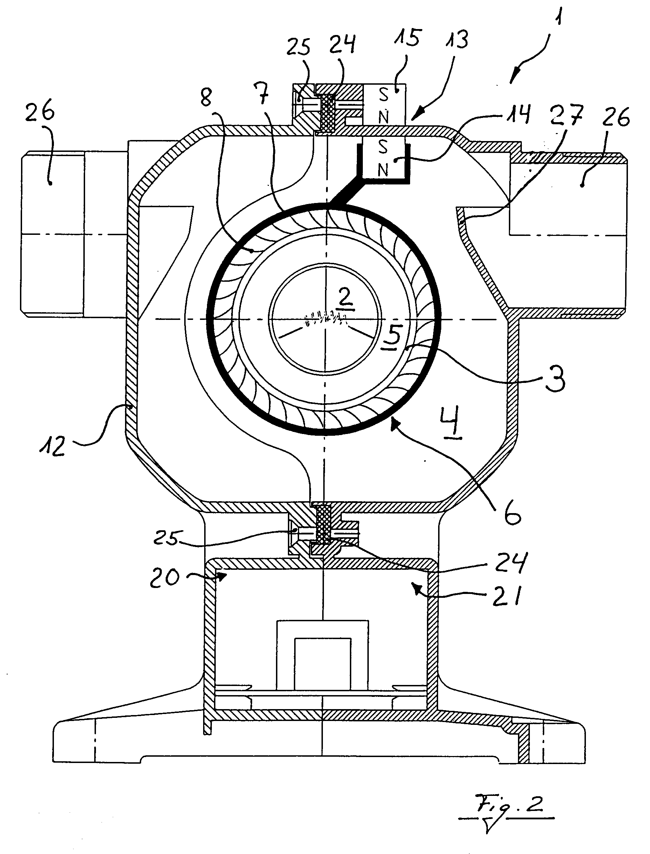

- Fig. 2: einen Schnitt entlang der Linie II-II in Fig. 1,

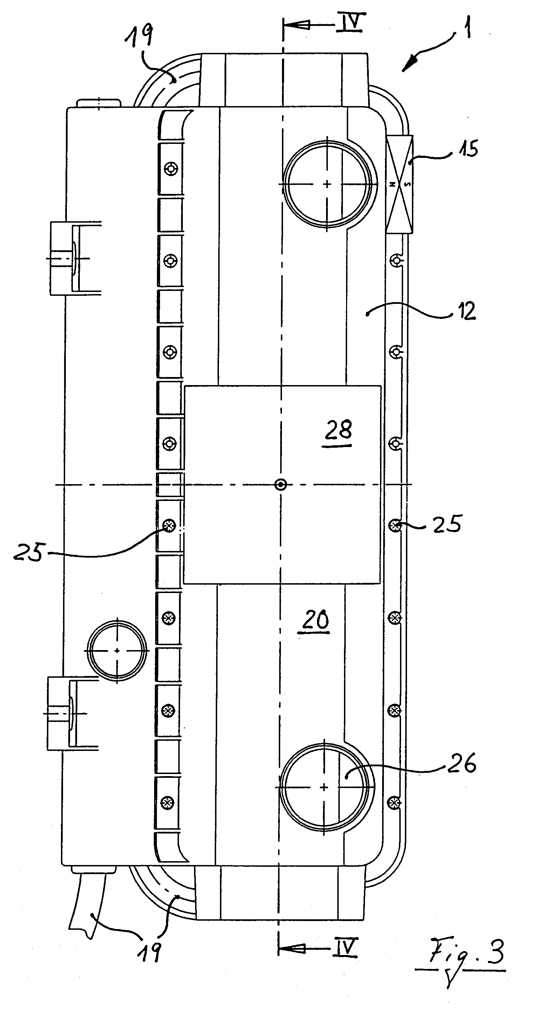

- Fig. 3: die Bestrahlungseinheit in Seitenansicht,

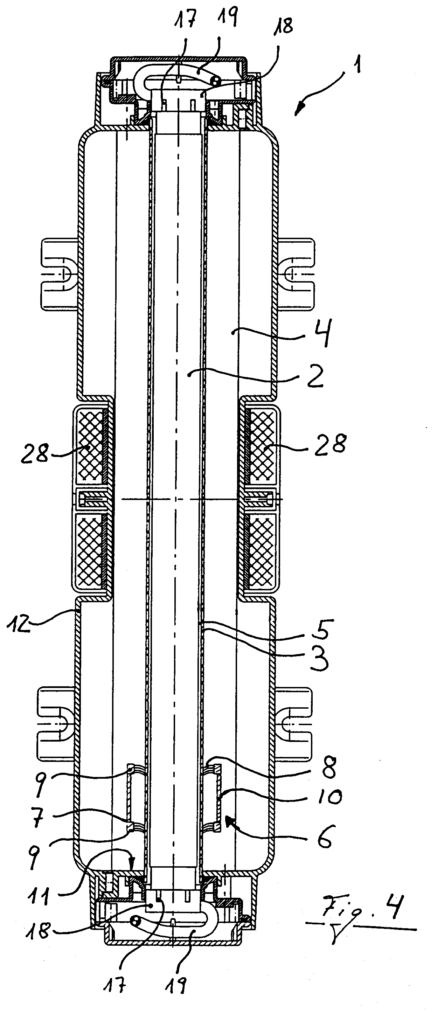

- Fig. 4: einen Schnitt entlang der Linie IV-IV in Fig. 3.

Im einzelnen weist die Bestrahlungseinheit 1 eine innenliegende Gasentladungslampe 2 auf, die über eine rundzylindrische Schutzscheibe 3 von dem Flüssigkeitsraum 4 der Bestrahlungseinheit 1 abgetrennt ist, wobei zwischen der Schutzscheibe 3 und der Gasentladungslampe 2 ein Trockenraum 5 verbleibt.

Im vorliegenden Ausführungsbeispiel ist die Lampe 2 als zweiseitig kontaktierte Gasentladungsröhre ausgebildet, es kommen jedoch auch Röhren in Frage, die nur einseitig kontaktiert sind, ebenso anders geartete Lampen und UV-Bestrahlungsquellen. Auch muß die Schutzscheibe 3 nicht zylindrisch ausgebildet sein, sondern kann auch planeben oder winklig oder sonst an die Form der Lampen 2 bzw. die geometrischen Anforderungen der Bestrahlungseinheit 1 angepaßt sein. Die Schutzscheibe 3 kann auf ihrer Außenseite vollständig mit Flüssigkeit umspült sein, sie kann jedoch, etwa wenn sie sich im Deckelbereich einer Bestrahlungseinheit befindet, auch entweder nur teilweise von Flüssigkeit benetzt sein oder sich oberhalb eines Flüssigkeitspiegels befinden.

Die Anzahl der in der Bestrahlungseinheit angeordneten Gasentladungslampen 2 ist ebenfalls variabel.

Auf der flüssigkeitsbeaufschlagten Seite der Schutzscheibe 3 ist ein gegenüber dieser beweglich angeordnetes Reinigungselement 6 angebracht, das bei Ausbildung der Schutzscheibe 3 als rundzylindrischen Körpers einen die Schutzscheibe 3 umgreifenden Ring 7 umfaßt, der entweder als durchgehender Ring ausgebildet ist oder - nicht eingezeichnet - eine Unterbrechung über seinen Umfang aufweist, so daß er gegenüber der zu reinigenden Schutzscheibe 3 im Sinne eines erhöhten Anlagedruckes vorgespannt ist. Der Ring 7 ist innenseitig mit Borsten 8 versehen, so daß das Reinigungselement 6 insgesamt als Bürste ausgebildet ist. Ebenfalls kann das Reinigungselement 6 als Schabwerkzeug ausgebildet sein, wozu beispielsweise bei planebenen Schutzscheiben 3 spachtelähnliche Reinigungselemente in Frage kommen. Auch eine schwammartige Ausbildung eines Reinigungselementes ist denkbar. In jedem Fall muß das Reinigungselement 6 so ausgebildet sein, daß es durch die aus der Lampe 2 austretende Strahlung nicht zerstört wird.

Das Reinigungselement 6 umfaßt zwei Reinigungskörper 9, die an gegenüberliegenden Ende eines Tragkörpers 10 angeordnet sind. Dadurch wird es möglich, bei Bewegung des Reinigungselementes in die Extrempositionen jeweils die Schutzscheibe 3 bis zu ihrem äußeren Rand hin reinigen zu können, da die Reinigungskörper 9 dann an der Innenwandung 11 des Gehäuses 12 der Bestrahlungseinheit 1 anliegen. Um die Verfahrbarkeit des Reinigungselementes 6 entlang der Schutzscheibe 3 zu ermöglichen, ist dem die Schutzscheibe umgreifenden Ring 7 des Reinigungselementes 6 ein Betätigungselement 13 zugeordnet, das einen ferromagnetischen Körper 14 umfaßt, der im Innern der Gehäuses 12 angeordnet und starr mit dem Ring 7 verbunden ist und dessen Bewegung durch einen äußeren ferromagnetischen Körper 15 angetrieben wird, der auf der Außenseite des Gehäuses 12 zumindest entlang der Längsachse der Schutzscheiben 3 verfahrbar ist, wobei eine Bewegung des ferromagnetischen Körpers 15 über magnetische Kopplung eine gleichlaufende Bewegung des ferromagnetischen Körpers 14, und damit des mit diesem verbundenen Reinigungselemente 6, bewirkt.

Zumindest einer der beiden ferromagnetischen Körper 14,15 ist als Permanentmagnet ausgebildet. Zur Führung der ferromagnetischen Körper 14,15 können an dem Gehäuse 12 noch Führungsbahnen ausgebildet sein, so daß allein eine Bewegung entlang der Längsachse der Schutzscheibe 3 möglich ist.

Alternative Möglichkeiten zur Bewegung des Reinigungselementes 6 kommen in Frage, etwa ein durch die Stirnseiten 16 des Gehäuses 12 geführtes Gestänge - nicht eingezeichnet -, das eventuell oberhalb eines Flüssigkeitsspiegels liegt, so daß die Anforderungen an die Abdichtung gering sind. Auch eine Führung eines Betätigungselementes 13 nach außen hin in einem fiüssigkeitsbelasteten Bereich ist bei entsprechender Abdichtung möglich, erfordert jedoch einen relativ hohen Bauaufwand.

Insbesondere für eine Bestrahlungseinheit 1 mit einem Reinigungselement der oben beschriebenen Art, jedoch auch für andere die Bestrahlungseinheiten 1 mit röhrenförmigen Gasentladungslampen 2, die an ihren beiden Enden Kontakte 17 aufweisen, sind Anschlußkappen 18 so ausgebildet, daß sie einerseits die durch das Kabel 19 an die Anschlußkappen 18 herangeführten elektrischen Kontakte der Röhre 2 tragen und andererseits den Trockenraum 5 zu den Stirnseiten 16 hin flüssigkeitsdicht und optisch dicht abschließen. Dadurch wird bei Abziehen einer solchen Anschlußkappe 18 eine Unterbrechung der Spannungszufuhr zu der Lampe 2 bewirkt, so daß eine Gefahr, daß ein Demontierender mit UV-Strahlung der Lampe 2 beaufschagt wird, zuverlässig vermieden ist. Ein Betrieb der Lampe 2 ist daher nur bei aufgesetzten Anschlußkappen 18 möglich, dann aber ist ein Austritt von Licht, etwa zu den Stirnseiten 16 hin, aus der Bestrahlungseinheit 1 unterbunden.

Um weiter die Demontage und auch die Ersatzteilbeschaffung zu verbessern, besteht das Gehäuse 12 aus zwei baugleichen Gehäusehälften 20,21, die entlang einer Trennfuge 22 miteinander verbunden sind und achssymmetrisch zu einer in Draufsicht Hochachse 21 ausgebildet sind, die sowohl in der Querals auch in der Längsmittelebene der Bestrahlungseinheit 1 liegt. Dadurch ist zur Ausbildung eines Gehäuses 12 der Strahlungseinheit 1 nur ein Baute 20 bzw. 21 nötig, das in zweifacher, gegenüberliegender Anordnung das Gehäuse 12 ausbildet.

Neben der Achssymmetrie kann zusätzlich eine Symmetrie der Teile 20,21 zu einer der Mittelebenen vorliegen. Die Gehäusehälften 20,21 liegen über Dichtungen 24 aneinander, wobei die zur Festlegung der Gehäusehälften 20,21 dienenden Schrauben 25 durch die Dichtungen 24 hindurchgeführt sind.

Das Gehäuse 12 ist mit Wasserein- bzw. -austritten 26 versehen, die mit einer Abschirmung 27 ausgestattet sind, um auch hier einen Austritt von UV-Licht aus nicht angeschlossenen Anschlüssen 26 zu vermeiden.

Zudem kann das Gehäuse 12 mit seitlichen Magneten 28 versehen sein, die symmetrisch zur Längsachse der Bestrahlungseinheit 1 angeordnet und zur Veränderung der für die Wasserhärte maßgebliche Moleküle vorgesehen sind.

## Patentansprüche

1. Vorrichtung zur Behandlung von Flüssigkeiten, insbesondere von in Kreisläufen geführtem Wasser von Aquarien oder Teichen, mit einer zur Beaufschlagung der Flüssigkeit mit Licht, insbesondere UV-Licht, ausgebildeten Bestrahlungseinheit (1), die zumindest eine Lampe (2) umfaßt, die in einem gegenüber der zu bestrahlenden Flüssigkeit durch eine transparente Schutzscheibe (3) separierten Trockenraum (5) angeordnet ist, **gekennzeichnet durch** zumindest ein der Schutzscheibe (3) zugewandtes und auf deren flüssigkeitsbeaufschlagter Seite beweglich angeordnetes Reinigungselement (6).

2. Vorrichtung nach Anspruch 1, **dadurch gekennzeichnet,** daß die Schutzscheibe (3) im Betriebszustand von der zu reinigenden Flüssigkeit benetzt ist.

3. Vorrichtung nach Anspruch 2, **dadurch gekennzeichnet,** daß die Schutzscheibe (3) die Lampe (2) umgibt und als im wesentlichen zylindrischer Körper ausgebildet ist.

4. Vorrichtung nach Anspruch 3, **dadurch gekennzeichnet,** daß das Reinigungselement (6) zumindest einen die Schutzscheibe (3) umgreifenden Ring (7) umfaßt.

5. Vorrichtung nach Anspruch 3, **dadurch gekennzeichnet,** daß das Reinigungselement (6) zumindest zwei Reinigungskörper (9) an gegenüberliegenden Enden eines Tragkörpers (10) umfaßt.

6. Vorrichtung nach Anspruch 4 oder 5, **dadurch gekennzeichnet,** daß der Ring (7) als vorgespannter offener Ring ausgebildet ist.

7. Vorrichtung nach einem der Ansprüche 3 bis 6, **dadurch gekennzeichnet,** daß der die Schutzscheibe (3) umgreifende Ring (7) über ein von außen bedienbares Betätigungselement (13) entlang der Schutzscheibe (3) verfahrbar ist.

8. Vorrichtung nach einem der Ansprüche 3 bis 7, **dadurch gekennzeichnet,** daß das Betätigungselement (13) einen dem Ring (7) zugeordneten und an der Innenwandung der Bestrahlungseinheit (1) anliegenden ferromagnetischen Körper (14) sowie einen außenseitig an der Bestrahlungseinheit (1) verfahrbaren ferromagnetischen Körper (15), der dem innenseitigen gegenüberliegt, umfaßt, wobei zumindest einer der ferromagnetischen Körper (14;15) als Permanentmagnet ausgebildet ist.

9. Vorrichtung nach Anspruch 7, **dadurch gekennzeichnet,** daß das Reinigungselement (6) über ein Schubgestänge mit einem nach außen geführten Bedienhebel beweglich ist.

10. Vorrichtung nach einem der Ansprüche 1 bis 9, **dadurch gekennzeichnet,** daß das Reinigungselement (6) als Bürste (8) ausgebildet ist.

11. Vorrichtung nach einem der Ansprüche 1 bis 9, **dadurch gekennzeichnet,** daß das Reinigungselement (6) als Schabwerkzeug ausgebildet ist.

12. Vorrichtung zur Reinigung von Flüssigkeiten, insbesondere von in Kreisläufen geführtem Wasser von Aquarien oder Teichen, mit einer Bestrahlungseinheit (1), die zumindest eine im wesentlichen röhrenförmige Gasentladungslampe (2) mit an beiden Enden angeordneten Kontakten (17) umfaßt, die in einem gegenüber dem zu reinigenden Medium durch eine Schutzscheibe (3) separierten Trockenraum (5) angeordnet ist, insbesondere nach einem der Ansprüche 1 bis 11, **dadurch gekennzeichnet,** daß die endseitigen elektrischen Kontakte (17) der Röhre (2) an beiden Enden über Anschlußkappen (18) angeschlossen werden, die einerseits die elektrischen Anschlüsse tragen und andererseits Abschlußkappen für den Trockenraum (5) bilden.

13. Vorrichtung zur Reinigung von Flüssigkeiten, insbesondere von in Kreisläufen geführtem Wasser von Aquarien oder Teichen, mit einer Bestrahlungseinheit (1), die zumindest eine Lampe (2) umfaßt, die in einem gegenüber dem zu reinigenden Medium durch eine Schutzscheibe (3) separierten Trockenraum (5) angeordnet ist, wobei die Bestrahlungseinheit (1) in einem externen, von weiteren Filtereinrichtungen abgetrennten Bereich in einem separaten Gehäuse (12) angeordnet ist, insbesondere Vorrichtung nach einem oder mehreren der Ansprüche 1 bis 12, **dadurch gekennzeichnet**, daß das Gehäuse aus zwei baugleichen, achssymmetrisch ausgebildeten Gehäusehälften (20;21) besteht.

14. Vorrichtung nach Anspruch 13, **dadurch gekennzeichnet,** daß die Gehäusehälften (20;21) über Dichtungen (24) aneinanderliegen und über Schrauben (25) durch die Dichtungen (24) hindurch aneinander festgelegt sind.
